# EUROPÄISCHE PATENTSCHRIFT

(11) **EP 3 159 508 B1**
(45) Veröffentlichungstag und Bekanntmachung des Hinweises auf die Patenterteilung: **23.05.2018**
(21) Anmeldenummer: 16194344.4
(22) Anmeldetag: 18.10.2016
(51) Int. Cl.: F01N 3/20

(54) **VORRICHTUNG UND VERFAHREN ZUR ABGABE VON REAKTIONSMITTEL IN DEN ABGASSTROM EINER BRENNKRAFTMASCHINE**
DEVICE AND METHOD FOR DISPENSING REAGENT INTO THE EXHAUST GAS FLOW OF AN INTERNAL COMBUSTION ENGINE
DISPOSITIF ET PROCÉDÉ DE DISTRIBUTION DE RÉACTIF DANS LE FLUX DE GAZ D'ÉCHAPPEMENT D'UN MOTEUR À COMBUSTION INTERNE

(30) Priorität: 23.10.2015 DE 102015118147
(43) Veröffentlichungstag der Anmeldung: 26.04.2017
(73) Patentinhaber: Eberspächer Exhaust Technology GmbH & Co. KG, 66539 Neunkirchen (DE)
(72) Erfinder: Gaiser, Gerd, 72768 Reutlingen (DE)
(74) Vertreter: RLTG

(56) Entgegenhaltungen:
- EP-A1- 2 375 054
- WO-A1-2013/178384
- DE-A1-102006 012 855
- DE-A1-102006 053 558
- DE-A1-102007 034 314
- JP-A- H0 559 933

## Beschreibung

Die vorliegende Erfindung betrifft eine Vorrichtung zur Abgabe von Reaktionsmittel in den Abgasstrom einer Brennkraftmaschine, umfassend eine Reaktionsmitteleinspritzanordnung, eine Reaktionsmittelförderanordnung zum Fördern von Reaktionsmittel aus einem Reaktionsmittelreservoir zu der Reaktionsmitteleinspritzanordnung und eine Heizanordnung zum Erwärmen von durch die Reaktionsmittelförderanordnung zu der Reaktionsmitteleinspritzanordnung gefördertem Reaktionsmittel. Ferner betrifft die vorliegende Erfindung ein Verfahren, mit welchem vermittels einer derartigen Vorrichtung Reaktionsmittel in den Abgasstrom einer Brennkraftmaschine abgegeben werden kann.

Aus der DE 10 2006 049 591 A1 ist eine Vorrichtung zur Abgabe von Reaktionsmittel in den Abgasstrom einer Brennkraftmaschine bekannt. Das durch diese Vorrichtung abzugebende Reaktionsmittel ist eine Harnstofflösung. Um mittels einer Reaktionsmittelförderanordnung zu einer Reaktionsmitteleinspritzanordnung geförderte Harnstofflösung möglichst effizient mit dem Abgasstrom zu vermischen, wird bei dieser bekannten Vorrichtung das in Richtung zur Reaktionsmitteleinspritzanordnung geförderte Reaktionsmittel erwärmt, beispielsweise auf eine Temperatur von etwa 200°C. Gleichzeitig wird das vor Abgabe in den Abgasstrom in flüssiger Form zugeführte Reaktionsmittel unter derart hohen Druck gesetzt, dass eine Reaktionsmittelverdampfung vor dem Abgeben des Reaktionsmittels in den Abgasstrom nicht auftreten kann. Eine derartige Vorrichtung nutzt den Effekt, dass bei der Abgabe des erwärmten und zunächst unter erhöhtem Druck stehenden Reaktionsmittels in den Abgasstrom eine spontane Entspannung auftritt, was einerseits zu einer spontanen Reaktionsmittelverdampfung führt, andererseits zu sehr feinen Reaktionsmitteltröpfchen des nicht spontan verdampften Anteils des Reaktionsmittels führt, wodurch eine sehr effiziente und feine Durchmischung des Reaktionsmittels mit dem in einem Abgasführungssystem strömenden Abgas einer Brennkraftmaschine erreicht wird.

Eine Vorrichtung zur Abgabe von Reaktionsmittel in den Abgasstrom einer Brennkraftmaschine gemäß dem Oberbegriff des Anspruchs 1 ist aus der EP 2 375 054 A1 bekannt. Bei dieser bekannten Vorrichtung sind die beiden Reaktionsmittelpumpen zueinander seriell angeordnet. Die den Druck des Reaktionsmittels über den Dampfdruck anhebende zweite Reaktionsmittelpumpe fördert Reaktionsmittel in eine zur ersten Reaktionsmittelpumpe führende Reaktionsmittelleitung. Die erste Reaktionsmittelpumpe erhöht den Reaktionsmitteldruck derart, dass eine druckabhängig schaltendende Reaktionsmitteleinspritzanordnung öffnen und Reaktionsmittel in den Abgasstrom einer Brennkraftmaschine abgeben kann.

Es ist die Aufgabe der vorliegenden Erfindung, eine Vorrichtung und ein Verfahren zur Abgabe von Reaktionsmittel in den Abgasstrom einer Brennkraftmaschine bereitzustellen, mit welcher bei konstruktiv einfacher Ausgestaltung eine effiziente Durchmischung des Reaktionsmittels mit dem dieses aufnehmenden Abgas einer Brennkraftmaschine erreicht werden kann.

Gemäß einem ersten Aspekt wird diese Aufgabe gelöst durch eine Vorrichtung zur Abgabe von Reaktionsmittel in den Abgasstrom einer Brennkraftmaschine gemäß Anspruch 1. Diese umfasst eine Reaktionsmitteleinspritzanordnung, eine Reaktionsmittelförderanordnung zum Fördern von Reaktionsmittel aus einem Reaktionsmittelreservoir zu der Reaktionsmitteleinspritzanordnung und eine Heizanordnung zum Erwärmen von durch die Reaktionsmittelförderanordnung zu der Reaktionsmitteleinspritzanordnung gefördertem Reaktionsmittel.

Dabei ist weiter vorgesehen, dass die Reaktionsmitteleinspritzanordnung in Abhängigkeit von einem durch die Reaktionsmittelfördereranordnung erzeugten Reaktionsmitteldruck zwischen einem Offenzustand zum Abgeben von Reaktionsmittel und einem Sperrzustand zum Unterbinden der Reaktionsmittelabgabe umschaltbar ist.

Bei dem erfindungsgemäßen Aufbau wird eine passiv arbeitende Reaktionsmitteleinspritzanordnung verwendet, also eine Reaktionsmitteleinspritzanordnung, die selbst nicht zur Durchführung von Einspritzvorgängen angesteuert werden muss. Vielmehr wird abhängig von dem vermittels der Reaktionsmittelförderanordnung generierten Reaktionsmitteldruck die Reaktionsmitteleinspritzanordnung automatisch in den Offenzustand gebracht, um Reaktionsmittel in den Abgasstrom abzugeben, nämlich dann, wenn der Reaktionsmitteldruck einen Schaltdruck der Reaktionsmitteleinspritzanordnung übersteigt. Die Reaktionsmitteleinspritzanordnung kehrt selbsttätig in den Sperrzustand zurück, wenn der Schaltdruck wieder unterschritten wird. Somit kann alleine durch Einstellung des Reaktionsmitteldrucks vermittels entsprechender Ansteuerung der Reaktionsmittelförderanordnung dafür gesorgt werden, dass nicht nur eine Reaktionsmittelverdampfung noch vor Abgabe in den Abgasstrom verhindert wird, sondern auch dass zum Abgeben des Reaktionsmittels in den Abgasstrom die Reaktionsmitteleinspritzanordnung in ihren Offenzustand überführt wird. Dies ermöglicht es, durch die Erwärmung des Reaktionsmittels vermittels der Heizanordnung auch eine Temperatur, die bei Normalbedingungen, also unter Normaldruck, eine Verdampfung des Reaktionsmittels zur Folge hätte, der vorangehend beschriebene Effekt der spontanen Verdampfung bzw. der Erzeugung eines sehr feinen Reaktionsmittelsprays bei Abgabe aus der Reaktionsmitteleinspritzanordnung genutzt werden kann. Infolgedessen kann eine derartige Vorrichtung bereits auch bei vergleichsweise niedrigen Abgastemperaturen zum Einsatz gebracht werden, welche ansonsten für eine ausreichende Reaktionsmittelverdampfung nicht geeignet wären. Auch wird bei Einsatz der erfindungsgemäßen Vorrichtung eine verbesserte Umsetzung eines beispielsweise als Harnstoff/Wasser-Lösung ausgebildeten Reaktionsmittels zu Ammoniak erreicht, verbunden mit einer verbesserten NOx-Umwandlung und einem geringeren Verbrauch des Reaktionsmittels bei gleichzeitig ermöglichtem geringeren Volumen eines im Abgasführungssystem der Verbrennungsabgase einer Brennkraftmaschine vorgesehenen Katalysators. Durch die neben der spontanen Reaktionsmittelverdampfung auftretende Erzeugung sehr feiner Reaktionsmitteltröpfchen wird aufgrund des besseren Oberfläche/Volumen-Verhältnisses auch eine schnellere Abdampfung des in Tröpfchenform abgegebenen Reaktionsmittels erreicht, da die aufzuheizende Masse der Tröpfchen proportional zu deren Volumen ist. Weitere die Durchmischung des Reaktionsmittels mit dem im Abgasstrom geführten Abgasen unterstützende technische Maßnahmen, wie z. B. eine Druckluftunterstützung bei der Sprayerzeugung oder die Durchmischung vermittels im Abgasstrom vorgesehener Mischelemente, können somit zumindest teilweise entfallen.

Zum Umschalten zwischen dem Sperrzustand und dem Offenzustand kann die Reaktionsmitteleinspritzanordnung ein in Abhängigkeit von dem Reaktionsmitteldruck zwischen einer Sperrstellung und einer Offenstellung verstellbares Sperrorgan umfassen.

Um in einfacher Weise eine das Umschalten zwischen dem Sperrzustand und dem Offenzustand hervorrufende Wechselwirkung des Sperrorgans mit dem Reaktionsmittel bereitstellen zu können, wird vorgeschlagen, dass das Sperrorgan eine dem Reaktionsmitteldruck ausgesetzte Druckbeaufschlagungsfläche aufweist, oder/und dass dem Sperrorgan eine Vorspannanordnung, vorzugsweise Vorspannfeder, zum Vorspannen des Sperrorgans in seine Sperrstellung entgegen dem auf eine dem Reaktionsmitteldruck ausgesetzte Druckbeaufschlagungsfläche des Sperrorgans einwirkenden Reaktionsmitteldruck zugeordnet ist.

Zum Verhindern einer Reaktionsmittelabgabe im Sperrzustand einerseits und zum Freigeben des Reaktionsmittelstroms im Offenzustand andererseits wird vorgeschlagen, dass dem Sperrorgan ein Sperrorgansitz mit einem Sperrorgansitz-Verschlussbereich zugeordnet ist, und dass bei in der Sperrstellung positioniertem Sperrorgan das Sperrorgan mit einem Sperrorgan-Verschlussbereich im Wesentlichen fluiddicht an dem Sperrorgansitz-Verschlussbereich anliegt und bei in der Offenstellung positionierten Sperrorgan ein Durchströmbereich für das Reaktionsmittel zwischen dem Sperrorgan und dem Sperrorgansitz gebildet ist.

Dabei kann gemäß einer erfindungsgemäßen Ausgestaltungsform vorgesehen sein, dass in der Reaktionsmitteleinspritzanordnung bei in der Offenstellung positioniertem Sperrorgan auf den Durchströmbereich kein Bereich mit größerem Strömungswiderstand für das Reaktionsmittel als im Durchströmbereich folgt. Bei dieser Ausgestaltung wird in besonders vorteilhafter Weise der Effekt genutzt, dass folgend auf den Durchströmbereich kein Restvolumen von Reaktionsmittel verbleibt, in welchem im Bereich der Reaktionsmitteleinspritzanordnung bereits eine zu Nebenprodukten führende Reaktionsmittelabdampfung stattfinden kann, bevor das Reaktionsmittel vollständig entspannt und in den Abgasstrom eingeleitet wird.

Bei einer alternativen Ausgestaltungsform kann vorgesehen sein, dass die Reaktionsmitteleinspritzanordnung stromabwärts des Reaktionsmitteldurchströmbereichs eine Reaktionsmittelabgabedüsenanordnung mit größerem Strömungswiderstand für das Reaktionsmittel als im Reaktionsmitteldurchströmbereich aufweist. Diese Ausgestaltungsvariante nutzt den besonders vorteilhaften Aspekt, dass das Abgabeverhalten, insbesondere die Sprühnebelausbildung, primär durch die Gestaltung der Reaktionsmittelabgabedüsenanordnung beeinflusst werden kann und weniger stark beeinflusst ist beispielsweise durch den tatsächlich vorhandenen Reaktionsmitteldruck. Somit kann im Wesentlichen unabhängig vom Reaktionsmitteldruck und somit beispielsweise auch im Wesentlichen unabhängig von der Temperatur des Reaktionsmittels eine für verschiedenste Betriebszustände weitestgehend gleiche Abgabecharakteristik erreicht werden.

Um in zuverlässiger Weise das Reaktionsmittel zur Reaktionsmitteleinspritzanordnung fördern zu können, umfasst die Reaktionsmittelförderanordnung eine erste Reaktionsmittelpumpe zum Fördern von Reaktionsmittel zu der Reaktionsmitteleinspritzanordnung, wobei die erste Reaktionsmittelpumpe dazu ausgebildet ist, einen über einem Schaltdruck zum Schalten der Reaktionsmitteleinspritzanordnung aus dem Sperrzustand in den Offenzustand liegenden Reaktionsmitteldruck zu erzeugen.

Dabei kann beispielsweise die Reaktionsmittelpumpe als Hubkolbenpumpe ausgebildet sein, welche es gestattet, durch definierte Einstellung des Hubausmaßes und der Bewegungsgeschwindigkeit des Kolbens die Druckverhältnisse bzw. die Menge des abgegebenen Reaktionsmittels einzustellen. Gemäß einem weiteren vorteilhaften Aspekt kann zum Verhindern eines Rückströmens des Reaktionsmittels der ersten Reaktionsmittelpumpe ein stromabwärts derselben und stromaufwärts der Heizanordnung angeordnetes Rückschlagventil zugeordnet sein. Beispielsweise kann dieses Rückschlagventil in den Ausgangsbereich der Reaktionsmittelpumpe integriert sein.

Die Reaktionsmittelförderanordnung der erfindungsgemäß aufgebauten Vorrichtung umfasst ferner eine zweite Reaktionsmittelpumpe zum Bereitstellen von Reaktionsmittel mit einem unter dem Schaltdruck und über einem Dampfdruck des Reaktionsmittels im Bereich der Heizanordnung liegenden Basisdruck Somit kann durch diese zweite Reaktionspumpe grundsätzlich dafür gesorgt werden, dass das Reaktionsmittel im Bereich der erfindungsgemäßen Vorrichtung unter ausreichend hohem Druck gehalten wird, so dass eine Reaktionsmittelverdampfung in der Vorrichtung selbst verhindert wird. Den dann erforderlichen höheren Druck zum Überführen der Reaktionsmitteleinspritzanordnung in ihren Offenzustand generiert die erste Reaktionsmittelpumpe, welche somit im Wesentlichen nur in Abgabephasen aktiv sein muss, also in Phasen, in welchen tatsächlich Reaktionsmittel in den Abgasstrom eingeleitet werden soll.

Die zweite Reaktionsmittelpumpe kann beispielsweise als Zahnradpumpe ausgebildet sein, kann also grundsätzlich als eine Pumpe ausgebildet sein, die dazu geeignet ist, in einen im Wesentlichen kontinuierlichen Förder- bzw. Pumpbetrieb den Basisdruck bereitzustellen. Diesem kontinuierlichen Betrieb der zweiten Reaktionsmittelpumpe kann dann der beispielsweise diskontinuierliche Betrieb der ersten Reaktionsmittelpumpe in Abgabephasen überlagert werden.

Um zu gewährleisten, dass der vermittels der zweiten Reaktionsmittelpumpe generierte Reaktionsmitteldruck den Basisdruck nicht übersteigt, wird vorgeschlagen, dass der zweiten Reaktionsmittelpumpe ein stromabwärts derselben angeordnetes Überdruckventil zugeordnet ist, wobei das Überdruckventil ein Ansteigen des durch die zweite Reaktionsmittelpumpe erzeugten Reaktionsmitteldrucks über den Basisdruck unterbindet.

Um die Zusammenwirkung der beiden Reaktionsmittelpumpen insbesondere in den Abgabephasen zu ermöglichen, sind die erste Reaktionsmittelpumpe, vorzugsweise mit dem Rückschlagventil, und die zweite Reaktionsmittelpumpe, vorzugsweise mit dem Überdruckventil, zueinander parallel angeordnet. Bei dieser Ausgestaltung können also beide Reaktionsmittelpumpen dazu ausgebildet sein, das durch diese zu fördernde Reaktionsmittel aus einem Reservoir abzuziehen und in Richtung zur Heizanordnung bzw. zur Reaktionsmitteleinspritzanordnung zu fördern.

Um die für den Reaktionsmittelabgabebetrieb gewünschte Temperatur des Reaktionsmittels einerseits bzw. den zum Verhindern einer Reaktionsmittelverdampfung in der erfindungsgemäßen Vorrichtung selbst erforderlichen Basisdruck bzw. den zum Abgeben von Reaktionsmittel erforderlichen über dem Schaltdruck liegenden Druck andererseits bereitstellen zu können, ist eine Ansteuervorrichtung vorgesehen zum Ansteuern der Heizanordnung, vorzugsweise auf Grundlage einer Reaktionsmitteltemperatur im Bereich der Heizanordnung oder/und der Reaktionsmittelabgabeanordnung oder/und auf Grundlage einer Soll-Reaktionsmitteltemperatur, vorzugsweise auch zum Ansteuern der Reaktionsmittelförderanordnung, vorzugsweise auf Grundlage eines Reaktionsmitteldrucks im Bereich der Heizanordnung oder/und der Reaktionsmitteleinspritzanordnung oder/und auf Grundlage eines Soll-Reaktionsmitteldrucks.

Gemäß einem weiteren Aspekt wird die eingangs genannte Aufgabe gelöst durch ein Verfahren zum Abgeben von Reaktionsmittel in den Abgasstrom einer Brennkraftmaschine vermittels einer erfindungsgemäßen Vorrichtung, umfassend die Maßnahmen:
a) Betreiben der Heizeinrichtung zum Erwärmen von durch die Reaktionsmittelförderanordnung gefördertem Reaktionsmittel auf eine Überhitzungstemperatur,
b) Betreiben der Reaktionsmittelförderanordnung in einer Nicht-Abgabephase derart, dass der Reaktionsmitteldruck wenigstens im Bereich der Heizanordnung bei einem Basisdruck über einem Dampfdruck des Reaktionsmittels im Bereich der Heizanordnung und unter einem Schaltdruck der Reaktionsmitteleinspritzanordnung zum Schalten der Reaktionsmitteleinspritzanordnung von dem Sperrzustand zu dem Offenzustand liegt,
c) Betreiben der Reaktionsmittelförderanordnung in einer Abgabephase derart, dass der Reaktionsmitteldruck über dem Schaltdruck liegt.

Bei dem erfindungsgemäßen Verfahren wird also während des Erwärmens des Reaktionsmittels auf eine Überhitzungstemperatur, also eine Temperatur, welche beispielsweise bei Normaldruckbedingungen eine Verdampfung des Reaktionsmittels zur Folge hätte, die Reaktionsmittelförderanordnung so betrieben, dass der Reaktionsmitteldruck zumindest über dem Dampfdruck des Reaktionsmittels bei dieser Temperatur liegt und in Abgabephasen den Schaltdruck übersteigt, um vermittels der dann in den Offenzustand gebrachten Reaktionsmitteleinspritzanordnung das Reaktionsmittel in den Abgasstrom abzugeben.

Beispielsweise kann bei der Maßnahme a) die Heizanordnung derart betrieben werden, dass die Temperatur des Reaktionsmittels zwischen von 100 °C bis 370 °C liegt, vorzugsweise im Bereich von 120 °C bis 300 °C, weiter bevorzugt im Bereich von 130 °C bis 250 °C, am meisten bevorzugt im Bereich von 150 °C bis 200 °C.

Das Reaktionsmittel kann bei einer vorteilhaften Ausführungsform eine Harnstoff/Wasser-Lösung umfassen. Selbstverständlich können auch andere Reaktionsmittel, wie z. B. Denoxium oder Isocyansäure, zum Einsatz gebracht werden.

Um sicherzustellen, dass während einer Nicht-Abgabephase der Reaktionsmitteldruck ausreichend hoch ist, um eine Reaktionsmittelverdampfung zu verhindern, jedoch noch ausreichend nieder ist, um sicherzustellen, dass die Reaktionsmitteleinspritzanordnung in ihrem Sperrzustand verbleibt, wird vorgeschlagen, dass bei der Maßnahme b) die Reaktionsmittelförderanordnung derart betrieben wird, dass der Reaktionsmitteldruck im Bereich des 1,1-1,2-Fachen des Dampfdrucks des Reaktionsmittels im Bereich der Heizanordnung liegt oder/und dass der Schaltdruck im Bereich des 1,1-1,5-Fachen, vorzugsweise 1,2-1,4-Fachen des Basisdrucks liegt.

Zum Überführen der Reaktionsmitteleinspritzanordnung in ihren Offenzustand kann weiter vorgesehen sein, dass bei der Maßnahme c) die Reaktionsmittelförderanordnung derart betrieben wird, dass der Reaktionsmitteldruck um 0,2-2 bar über den Schaltdruck liegt.

Bei einer vorteilhaften Ausgestaltungsvariante des erfindungsgemäßen Verfahrens kann während einer Nicht-Abgabephase, also bei der Durchführung der Maßnahme b), nur die zweite Reaktionsmittelpumpe zum Bereitstellen des Reaktionsmitteldrucks betrieben werden. Soll in einer Abgabephase dann Reaktionsmittel abgegeben werden, kann bei der Durchführung der Maßnahme c) dann zusätzlich, ggf. auch ausschließlich, die erste Reaktionsmittelpumpe betrieben werden, um den dann über dem Schaltdruck liegenden Reaktionsmitteldruck zu generieren und Reaktionsmittel in einer definierten Menge und unter definierten Druckverhältnissen abzugeben.

Bei einer alternativen Ausgestaltungsvariante kann sowohl bei der Maßnahme b) als auch bei der Maßnahme c) der Reaktionsmitteldruck ausschließlich durch die erste Reaktionsmittelpumpe bereitgestellt werden.

Bei Ausgestaltung der ersten Reaktionsmittelpumpe als Hubkolbenpumpe wird gemäß einem besonders vorteilhaften Aspekt weiter vorgeschlagen, dass bei der Maßnahme c) die erste Reaktionsmittelpumpe einen einzigen Kolbenhub während einer Abgabephase durchführt. Es kann somit sichergestellt werden, dass während einer gesamten Abgabephase ein ausreichend hoher Druck beibehalten bleibt, um die Reaktionsmitteleinspritzanordnung in ihrem Offenzustand zu halten.

Um über eine längere Zeitdauer hinweg Reaktionsmittel in den Abgasstrom einer Brennkraftmaschine abgeben zu können, wird vorgeschlagen, dass während Durchführung der Maßnahme a) die Reaktionsmittelförderanordnung alternierend gemäß Maßnahme b) in einer Nicht-Abgabephase und gemäß Maßnahme c) in einer Abgabephase betrieben wird. Es findet somit ein getakteter Betrieb statt, welcher ermöglicht, definierte Reaktionsmittelmengen während der Abgabephasen abzugeben, während der Nichtabgabephasen jedoch dafür zu sorgen, dass ein ausreichender Reaktionsmitteldruck zum Verhindern einer Reaktionsmittelverdampfung in der erfindungsgemäßen Vorrichtung selbst aufrechterhalten werde kann.

Um die Menge des in den Abgasstrom abgegebenen Reaktionsmittel an den für die damit durchzuführende katalytische Reaktion bestehenden Bedarf anpassen zu können, wird vorgeschlagen, dass eine Dauer der Nicht-Abgabephasen oder/und eine Dauer der Abgabephasen oder/und der Reaktionsmitteldruck bei der Maßnahme c) in Abhängigkeit von einem Betriebszustand einer Brennkraftmaschine eingestellt wird.

Die vorliegende Erfindung wird nachfolgend mit Bezug auf die beiliegenden Figuren detailliert beschrieben. Es zeigt:
- Fig. 1: in prinzipartiger Darstellung eine erfindungsgemäße Vorrichtung zur Abgabe von Reaktionsmittel in den Abgasstrom einer Brennkraftmaschine mit zwei zueinander parallel wirkenden Reaktionsmittelpumpen einer Reaktionsmittelförderanordnung;
- Fig. 2: eine der Fig. 1 entsprechende Darstellung einer nicht erfindungsgemäßen Vorrichtung mit zwei zueinander seriell wirkenden Reaktionsmittelpumpen einer Reaktionsmittelförderanordnung;
- Fig. 3: eine der Fig. 1 entsprechende Darstellung einer nicht erfindungsgemäßen Vorrichtung mit einer Reaktionsmittelförderanordnung mit einer einzigen Reaktionsmittelpumpe;
- Fig. 4: eine vereinfachte Längsschnittansicht einer passiv, also druckgesteuert arbeitenden Reaktionsmitteleinspritzanordnung;
- Fig. 5: eine der Fig. 4 entsprechende Darstellung einer alternativen Ausgestaltungsart einer passiv wirkenden, also druckgesteuerten Reaktionsmitteleinspritzanordnung.

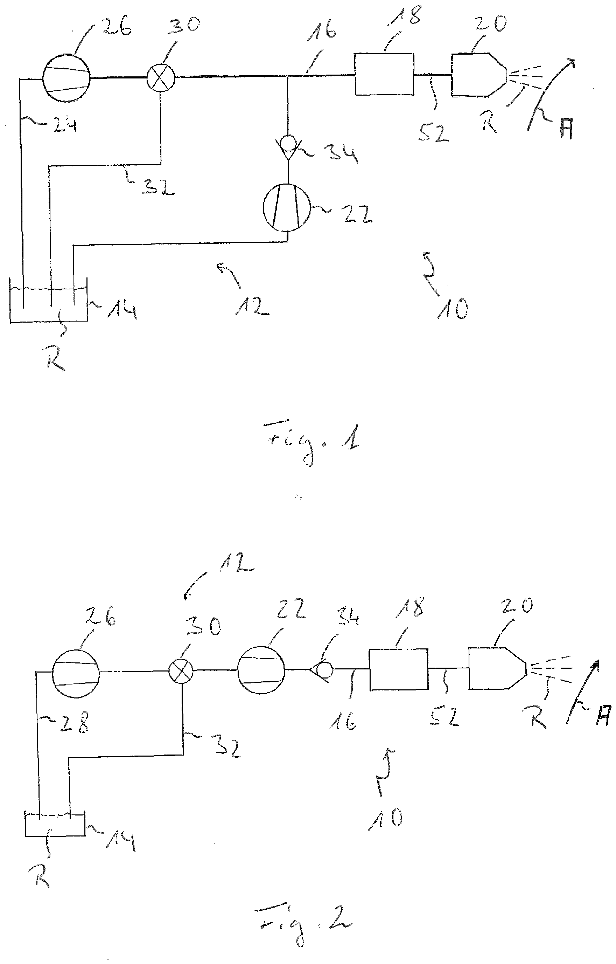

In Fig. 1 ist eine gemäß den Prinzipien der vorliegenden Erfindung aufgebaute Vorrichtung zur Abgabe von Reaktionsmittel in den Abgasstrom einer Brennkraftmaschine allgemein mit 10 bezeichnet. Die Vorrichtung 10 umfasst eine Reaktionsmittelförderanordnung 12, vermittels welcher Reaktionsmittel R aus einem Reaktionsmittelreservoir 14, also beispielsweise einem Speicherbehälter, entnommen und über eine Reaktionsmittelleitung 16 zu einer beispielsweise elektrisch erregbaren Heizanordnung 18 gefördert werden kann. In der Heizanordnung 18 wird das vermittels der Reaktionsmittelförderanordnung 12 geförderte bzw. unter Druck gesetzte Reaktionsmittel R auf eine Überhitzungstemperatur erwärmt und zu einer Reaktionsmitteleinspritzanordnung 20 weiter gefördert. Vermittels der Reaktionsmitteleinspritzanordnung wird das Reaktionsmittel R in den schematisch dargestellten Abgasstrom A abgegeben bzw. eingespritzt.

Bei der in Fig. 1 dargestellten Vorrichtung 10 ist die Reaktionsmitteleinspritzanordnung 20 passiv wirksam. Dies bedeutet, sie steht zur Abgabe von Reaktionsmittel R in den Abgasstrom A nicht unter der Ansteuerung einer Ansteuervorrichtung oder dergleichen, sondern schaltet druckabhängig, und zwar abhängig vom Reaktionsmitteldruck im Bereich der Reaktionsmittelleitung 16 bzw. im Bereich der Reaktionsmitteleinspritzanordnung 20 zwischen einem die Reaktionsmittelabgabe verhindernden Sperrzustand und einem die Reaktionsmittelabgabe ermöglichenden Offenzustand. Dabei ist der Schaltdruck, bei welchem die Reaktionsmitteleinspritzanordnung 20 zwischen dem Sperrzustand und dem Offenzustand umschaltet, so gewählt, dass er über dem Dampfdruck des im Bereich der Heizanordnung 18 erwärmten Reaktionsmittel R liegt. Beispielsweise kann durch die Heizanordnung 20 das Reaktionsmittel auf eine Temperatur zwischen 100 °C und 370 °C, also auf eine Überhitzungstemperatur, erwärmt werden. Bei einer derartigen Temperatur würde bei Normaldruck, also Umgebungsdruck, das Reaktionsmittel bereits in der Vorrichtung 10 verdampfen. Um dies zu verhindern, ist die Reaktionsmittelförderanordnung 12 dazu ausgebildet, nicht nur den zur Abgabe von Reaktionsmittel R erforderlichen Schaltdruck zu generieren, sondern auch in Nicht-Abgabephasen, also dann, wenn die Reaktionsmitteleinspritzanordnung 20 in ihrem Sperrzustand ist, im Bereich der Reaktionsmittelleitung 16 und somit insbesondere auch im Bereich der Heizanordnung 18 bzw. der Reaktionsmitteleinspritzanordnung 20 einen über dem Dampfdruck des auf die Überhitzungstemperatur erwärmten Reaktionsmittels R liegenden beispielsweise im Wesentlichen konstanten Basisdruck bereitzustellen.

Um dies zu erreichen, umfasst die Reaktionsmittelförderanordnung 12 bei der in Fig. 1 dargestellten Ausgestaltungsform eine erste Reaktionsmittelpumpe 22 in einer vom Reaktionsmittelreservoir 14 zur Reaktionsmittelleitung 16 führenden ersten Förderleitung 24 sowie eine zweite Reaktionsmittelpumpe 26 in einer vom Reaktionsmittelreservoir 14 ebenfalls zur Reaktionsmittelleitung 16 führenden zweiten Förderleitung 28. Die Förderleitungen 24 und 28 führen somit parallel zur Reaktionsmittelleitung 16, so dass die beiden Reaktionsmittelpumpen 22, 26 in dieser Ausgestaltungsvariante grundsätzlich parallel zueinander wirksam sind.

Die zweite Reaktionsmittelpumpe 26 ist grundsätzlich dazu ausgebildet, den Basisdruck bereitzustellen, welcher erforderlich ist, eine Reaktionsmittelverdampfung in dem stromabwärts der zweiten Reaktionsmittelpumpe 26 liegenden Leitungsbereich zu verhindern. Beispielsweise kann die zweite Reaktionsmittelpumpe 26 als eine im Wesentlichen in einem kontinuierlichen Förderbetrieb arbeitende Pumpe, beispielsweise als Zahnradpumpe, ausgebildet sein. Um den Basisdruck in definierter Art und Weise einstellen zu können, beispielsweise so, dass er im Bereich des 1,1 bis 1,2-Fachen des Dampfdrucks des Reaktionsmittels R insbesondere im Bereich der Heizanordnung 18 liegt, ist der zweiten Reaktionsmittelpumpe 26 ein Überdruckventil 30 zugeordnet, welches stromabwärts derselben in der zweiten Förderleitung 28 vorgesehen ist, beispielsweise aber auch in die zweite Reaktionsmittelpumpe 26 integriert sein kann. Von dem Überdruckventil 30 führt eine Rückführleitung 32 zurück zum Reaktionsmittelreservoir 14. Durch einen bei entsprechendem Reaktionsmittelbedarf im Wesentlichen kontinuierlichen Betrieb der zweiten Reaktionsmittelpumpe 26 kann somit sichergestellt werden, dass in dem stromabwärts des Überdruckventils 30 vorhandenen Bereich der zweiten Förderleitung 28, ebenso wie in der Reaktionsmittelleitung 16 und den darauf folgenden Systembereichen, also der Heizanordnung 18 und der Reaktionsmitteleinspritzanordnung 20, sowie in dem an die Reaktionsmittelleitung 16 bzw. zweite Förderleitung 28 anschließenden Bereich der ersten Förderleitung 24 zumindest immer der über dem Dampfdruck des Reaktionsmittels R liegende Basisdruck aufrecht erhalten wird. Dabei kann die Förderleistung bzw. Förderrate der zweiten Reaktionsmittelpumpe 26 durch entsprechende Ansteuerung derselben eingestellt werden und somit an den tatsächlichen Bedarf des Reaktionsmittels bzw. den zu erzeugenden Druck angepasst werden.

Die erste Reaktionsmittelpumpe 22 ist bei einer bevorzugten Ausgestaltungsvariante als Hubkolbenpumpe ausgebildet und dient dazu, zur Abgabe von Reaktionsmittel R aus der Reaktionsmitteleinspritzanordnung 20 den zum Überführen derselben in den Offenzustand erforderlichen Schaltdruck zu generieren bzw. einen über diesem Schaltdruck liegenden Reaktionsmitteldruck während einer jeweiligen Abgabephase aufrecht zu erhalten. Dabei kann die erste Reaktionsmittelpumpe nach Art einer zur Zufuhr von flüssigem Brennstoff zu brennstoffbetriebenen Fahrzeugheizungen aufgebauten Dosierpumpe mit einem in einer Pumpenkammer hin- und herbewegbaren Pumpenkolben aufgebaut sein, wie sie beispielsweise aus der deutschen Patentanmeldung DE 10 2004 034 231 A1 bekannt ist. Um zu verhindern, dass während eines Ansaugtaktes der ersten Reaktionsmittelpumpe 22 das in einer Nicht-Abgabephase unter Basisdruck stehende Reaktionsmittel über die erste Reaktionsmittelpumpe 22 in das Reaktionsmittelreservoir 14 zurückströmt, ist der ersten Reaktionsmittelpumpe 22 ein Rückschlagventil 34 zugeordnet, welches stromabwärts der ersten Reaktionsmittelpumpe 22 angeordnet ist, beispielsweise auch in diese integriert ist, wie es gleichermaßen bei Brennstoffdosierpumpen des aus dem Stand der Technik bekannten Aufbaus bekannt ist.

Um vermittels der in Fig. 1 dargestellten Vorrichtung 10 intermittierend, also in alternierenden Abgabephasen und Nicht-Abgabephasen, Reaktionsmittel R in einem an einen kontinuierlichen Reaktionsmittelstrom angenäherten, gleichwohl diskontinuierlichen Reaktionsmittelstrom abgeben zu können, wird bei nicht erregter erster Reaktionsmittelpumpe 22 während der Nicht-Abgabephasen durch entsprechende Ansteuerung der Reaktionsmittelpumpe 26 der Basisdruck aufrecht erhalten und somit eine Verdampfung des auf die Überhitzungstemperatur erwärmten Reaktionsmittels R in der Vorrichtung 10 selbst während der Nicht-Abgabephasen verhindert. Zum Abgeben von Reaktionsmittel R, also während der Abgabephasen, wird die erste Reaktionsmittelpumpe 22 aktiviert. Diese erzeugt beispielsweise bei Ausgestaltung derselben als Hubkolbenpumpe durch kontinuierliche Bewegung des Kolbens derselben und damit Ausstoßen von Reaktionsmittel aus einer Pumpenkammer einen den Schaltdruck der Reaktionsmitteleinspritzanordnung 20 übersteigenden Reaktionsmitteldruck, so dass die Reaktionsmitteleinspritzanordnung 20 in ihren Offenzustand überführt wird. Vorzugsweise liegt dieser Schaltdruck um einen Faktor 1,1 bis 1,5 über dem Basisdruck. Der durch die zweite Reaktionsmittelpumpe 22 in den Abgabephasen generierte Reaktionsmitteldruck liegt vorzugsweise in etwa 0,2 bis 2 bar über dem Schaltdruck. Insbesondere bei Ausgestaltung der erste Reaktionsmittelpumpe 22 als Hubkolbenpumpe kann durch definierte Ansteuerung derselben und somit definierte Bewegungsgeschwindigkeit des Kolbens derselben und definiertes Hubausmaß der Reaktionsmitteldruck eingestellt und aufrecht erhalten werden, so dass während der Abgabephasen nicht nur die Reaktionsmitteleinspritzanordnung 20 in ihrem Offenzustand gehalten wird, sondern durch entsprechende Einstellung des Reaktionsmitteldrucks auch eine definierte Reaktionsmittelmenge in den Abgasstrom A abgegeben werden kann.

Um einen weiteren Einfluss auf die Menge des in den Abgasstrom A abgegebenen Reaktionsmittels R zu erreichen, kann weiterhin die Abfolge der Abgabephasen und Nicht-Abgabephasen durch Einstellung der Dauer der Abgabephasen bzw. Einstellung der Dauer der Nicht-Abgabephasen eingestellt werden. Bei größerem Reaktionsmittelbedarf können auf kürzere Nicht-Abgabephasen längere Abgabephasen folgen, während bei geringerem Reaktionsmittelbedarf die Nicht-Abgabephasen länger sein können, während die Abgabephasen grundsätzlich kürzer sein können, als dann, wenn größerer Bedarf besteht. Vorteilhafterweise wird in Abstimmung auf die Dimensionierung der ersten Reaktionsmittelpumpe 22 die maximale Dauer der Abgabephasen derart bestimmt, dass die als Hubkolbenpumpe ausgebildete erste Reaktionsmittelpumpe 22 während einer jeweiligen Abgabephase nur einen einzigen Kolbenhub durchführt. Somit kann gewährleistet werden, dass im Verlaufe eines derartigen Kolbenhubs der über dem Schaltdruck liegende Reaktionsmitteldruck kontinuierlich aufrecht erhalten werden kann.

Mit der in Bezug auf die Fig. 1 beschriebenen Vorrichtung wird es möglich, während der Nicht-Abgabephasen das Reaktionsmittel R insbesondere im Bereich der Heizanordnung 18 und der Reaktionsmitteleinspritzanordnung 20 auf dem Basisdruck über dem Dampfdruck zu halten, wobei dieser Dampfdruck jeweils in Zuordnung zu einer im Bereich der Heizanordnung 18 jeweils bereitzustellenden Überhitzungstemperatur unter Berücksichtigung der Dampfdruckkurve eines jeweils eingesetzten Reaktionsmittels bestimmt werden kann. Während der Abgabephasen wird das unter erhöhtem Druck stehende Reaktionsmittel R in überhitztem Zustand aus der Reaktionsmitteleinspritzanordnung 20 abgegeben. Dabei tritt eine spontane Entspannung des Reaktionsmittels R auf, welche dazu führt, dass ebenso spontan ein Teil des Reaktionsmittels R verdampft, somit also in Dampfform in den Abgasstrom A eingeleitet wird. Der verbleibende, also nicht verdampfte Teil des aus der Reaktionsmitteleinspritzanordnung 20 abgegebenen Reaktionsmittels R wird in Form sehr kleiner Tröpfchen mit einer Größe im Sub-Mikrometerbereich in den Abgasstrom A abgegeben. Diese geringe Tröpfchengröße unterstützt die schnelle Verteilung des Reaktionsmittels R im Abgasstrom einerseits und unterstützt andererseits die schnelle Verdampfung dieses zunächst noch in Tröpfchenform, also grundsätzlich in flüssiger Form vorliegenden Reaktionsmittels, da in jedem dieser Tröpfchen mit sehr geringer Größe nur ein sehr kleines Reaktionsmittelvolumen zu erwärmen und zu verdampfen ist. Aufgrund dieser spontan auftretenden Verdampfung bzw. der nachfolgend sehr schnell auftretenden Verdampfung des in Tröpfchenform abgegebenen Reaktionsmittels ist die Verweilzeit von flüssigem Reaktionsmittel im Bereich der Reaktionsmitteleinspritzanordnung 20 sehr kurz, so dass die Gefahr der Entstehung von Reaktionsnebenprodukten, die zu einer Beeinträchtigung der Funktionalität der Reaktionsmitteleinspritzanordnung 20 führen könnten, weitestgehend eliminiert ist. Auf eine Druckluftunterstützung zur Sprayerzeugung ist somit nicht erforderlich, und auch weitere zur Durchmischung des Reaktionsmittels mit dem Abgasstrom A eingesetzte Maßnahme, wie z. B. das Bereitstellen von Mischelementen im stromabwärtigen Bereich eines Abgasführungssystems, kann weitestgehend verzichtet werden.

Eine nicht erfindungsgemäße Vorrichtung 10 ist in Fig. 2 gezeigt. Bei dieser Ausgestaltungsform ist die Reaktionsmittelförderanordnung 12 mit zwei seriell angeordneten Reaktionsmittelpumpen 22, 26 aufgebaut. Dabei ist die erste Reaktionsmittelpumpe 22 mit dem dieser zugeordneten Rückschlagventil 34 im stromabwärtigen Bereich der zweiten Förderleitung 28, also stromabwärts der zweiten Reaktionsmittelpumpe 26 und des darauf folgenden Überdruckventils 30 angeordnet. Bei dieser Ausgestaltungsform der Vorrichtung 10 wird die zweite Reaktionsmittelpumpe 26 betrieben, um den Basisdruck bereitzustellen, insbesondere den Basisdruck in einer Startphase aufzubauen, in welcher zunächst Reaktionsmittel R zur Heizanordnung 18 und zur Reaktionsmitteleinspritzanordnung 20 gefördert wird und die Heizanordnung 18 betrieben wird, um das Reaktionsmittel auf die Überhitzungstemperatur zu erwärmen.

Die erste Reaktionsmittelpumpe 22, die auch hier wieder als Hubkolbenpumpe in der vorangehend beschriebenen Art und Weise aufgebaut sein kann, dient dazu, den durch die zweite Reaktionsmittelpumpe 26 generierten Reaktionsmitteldruck dann zu erhöhen, wenn während einer Abgabephase Reaktionsmittel in den Abgasstrom A abgegeben werden soll. Dies bedeutet, dass die erste Reaktionsmittelpumpe 22 nur eine geringere Druckerhöhung des Reaktionsmittels generieren muss, als im Falle der in Fig. 1 dargestellten Ausgestaltungsform, was zur Folge haben kann, dass am Beginn einer jeweiligen Abgabephase ausgehend vom Basisdruck der Schaltdruck und der dann über dem Schaltdruck liegende und aufrecht zu erhaltende Druck schneller erreicht wird als in einem Fall, in welchem, wie dies bei der Ausgestaltungsform gemäß Fig. 1 zutrifft, die erste Reaktionsmittelpumpe 22 am Beginn einer jeweiligen Abgabephase zunächst den Basisdruck aufbauen bzw. gegen diesen Basisdruck arbeiten muss.

Bei der in Fig. 2 dargestellten Vorrichtung wird während eines alternierenden Umschaltens zwischen Abgabephasen und Nicht-Abgabephasen der Druck im Bereich zwischen dem Rückschlagventil 34 und der Reaktionsmitteleinspritzanordnung 20 nur geringfügig unter den Schaltdruck abfallen. Ist während einer Abgabephase die Reaktionsmitteleinspritzanordnung 20 in ihrem Offenzustand und soll die Abgabephase beendet werden, erfolgt dies dadurch, dass der Betrieb der ersten Reaktionsmittelpumpe 22 zum fortgesetzten Erhöhen bzw. Aufrechterhalten des Reaktionsmitteldrucks eingestellt wird. Die Reaktionsmittelabgabe dauert dann so lange an, bis in dem stromabwärts des Rückschlagventils 34 liegenden Bereich der Vorrichtung 10 durch fortgesetzte Entspannung der Reaktionsmitteldruck unter den Schaltdruck fällt und die Reaktionsmitteleinspritzanordnung 20 in ihren Sperrzustand zurückkehrt. Da das Rückschlagventil 34 eine weitere Entspannung des Reaktionsmitteldrucks in Richtung zur ersten Reaktionsmittelpumpe 22 bzw. zum Reaktionsmittelreservoir 14 verhindert, wird in dem stromabwärts des Rückschlagventils 34 liegenden Bereich ein weiterer Druckabfall nicht auftreten. Dies bedeutet, dass auch während des intermittierenden Reaktionsmittelabgabebetriebs, also beim alternierenden Umschalten zwischen Abgabephasen und Nicht-Abgabephasen im Leitungsbereich stromabwärts des Rückschlagventils 34 ein über dem Basisdruck, somit auch über dem Dampfdruck des Reaktionsmittels R insbesondere im Bereich der Heizanordnung 18 liegender, gleichwohl unter dem Schaltdruck liegender Reaktionsmitteldruck aufrecht erhalten bleibt, während in dem stromaufwärts des Rückschlagventils 34 liegenden Bereich, insbesondere im Bereich zwischen dem Rückschlagventil 34 und der zweiten Reaktionsmittelpumpe 26, im Wesentlichen der Basisdruck aufrecht erhalten wird.

Die Abgabe des Reaktionsmittels mit spontaner Verdampfung und Erzeugung sehr kleiner Reaktionsmitteltröpfchen, also die Erzeugung einer so genannten Flash-Verdampfung, entspricht der vorangehend mit Bezug auf die Fig. 1 Beschriebenen, so dass auf diese Ausführungen verwiesen werden kann.

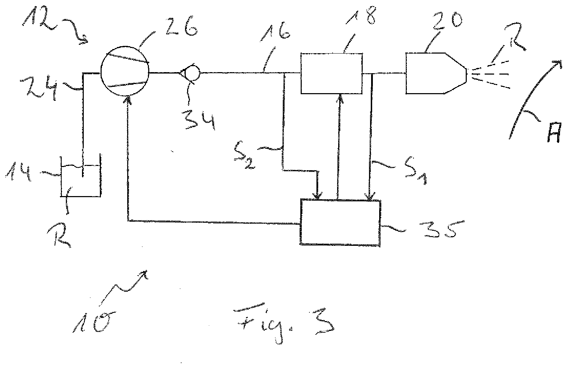

Eine weitere nicht erfindungsgemäße Vorrichtung ist in Fig. 3 gezeigt. Bei dieser Ausgestaltungsform der Vorrichtung 10 umfasst die Reaktionsmittelförderanordnung 12 nur eine einzige Reaktionsmittelpumpe, also beispielsweise die als Hubkolbenpumpe ausgebildete erste Reaktionsmittelpumpe 22, welcher wieder das Rückschlagventil 34 stromabwärts derselben zugeordnet sein kann. Die erste Reaktionsmittelpumpe 22 nimmt über die erste Förderleitung 24 Reaktionsmittel R aus dem Reaktionsmittelreservoir 14 auf und fördert dieses in Richtung zur Heizanordnung 18 bzw. zur Reaktionsmitteleinspritzanordnung 20. Dabei wird während der Nicht-Abgabephasen die erste Reaktionsmittelpumpe 22 derart betrieben, dass durch ein, ggf. mehrfaches Hin- und Herbewegen des Kolbens derselben der Basisdruck aufgebaut wird. In Abgabephasen wird der Druck im stromabwärts folgenden Bereich der Vorrichtung 10 auf den Schaltdruck bzw. einen über dem Schaltdruck liegenden Druck erhöht, um somit Reaktionsmittel R auszustoßen. Dabei kann vorteilhafterweise die erste Reaktionsmittelpumpe 22 wieder als Hubkolbenpumpe ausgebildet sein, so dass während einer jeweiligen Abgabephase mit einem einzigen vollständig oder auch nur teilweise durchgeführten Kolbenhub einerseits der erforderliche Druck aufgebaut wird, andererseits die erforderliche Reaktionsmittelmenge nachgefördert wird, um diesen Druck aufrecht zu erhalten und in gefordertem Ausmaß Reaktionsmittel in den Abgasstrom A einzuleiten.

Auch bei dieser Vorrichtung sorgt das Rückschlagventil 34 stromabwärts der ersten Reaktionsmittelpumpe 22 bzw. ggf. in diese integriert dafür, dass der Druck insbesondere im Bereich der Heizanordnung 18 und der Reaktionsmitteleinspritzanordnung 20 nicht unter den Basisdruck, insbesondere nicht unter den Dampfdruck des auf Überhitzungstemperatur erwärmten Reaktionsmittels R abfällt. Insbesondere wird auch bei dieser Ausgestaltungsform der Druck im Bereich stromabwärts des Rückschlagventils 34 während der Nicht-Abgabephasen nur geringfügig unter den Schaltdruck der Reaktionsmitteleinspritzanordnung 20 liegen. Während dieser Nicht-Abgabephasen kann durch entsprechendes Betreiben der ersten Reaktionsmittelpumpe 22 dafür gesorgt werden, dass im Leitungsbereich stromaufwärts des Rückschlagventils 34 der über dem Dampfdruck des Reaktionsmittels, jedoch unter dem Schaltdruck liegende Basisdruck aufgebaut wird.

Es sei darauf hingewiesen, dass bei dem erfindungsgemäßen Aufbau der Vorrichtung 10 die Heizanordnung 18 in beliebiger Weise ausgebildet sein kann, beispielsweise einen in einen Leitungsabschnitt integrierten Heizleiter, ggf. auch einen von dem Reaktionsmittel umströmbaren und somit in direkte thermische Wechselwirkung damit bringbaren Heizleiter umfassen kann, der unter Ansteuerung einer Ansteuervorrichtung 35 erregbar ist, um das Reaktionsmittel insbesondere in dem Bereich nahe der Reaktionsmitteleinspritzanordnung 20 auf die Überhitzungstemperatur zu erwärmen. Dabei kann beispielsweise eine Temperaturregelung stattfinden, wozu beispielsweise auch im Bereich der Heizanordnung 18, also z. B. in diese integriert oder geringfügig stromaufwärts oder stromabwärts davon, ein Temperatursensor vorgesehen sein kann, um die Temperatur des Reaktionsmittels zu erfassen und über eine Signalleitung S1 entsprechende Information in die Ansteuervorrichtung einzugeben. Vorteilhafterweise ist die Heizanordnung 18 sehr nahe an der Reaktionsmitteleinspritzanordnung 20, beispielsweise unmittelbar an diese anschließend vorgesehen. Somit wird gewährleistet, dass das Volumen des überhitzten Reaktionsmittels möglichst gering gehalten ist bzw. auch die Verweilzeit des Reaktionsmittels auf der Überhitzungstemperatur möglichst kurz ist und somit einer thermisch bedingten Alterung des Reaktionsmittels vorgebeugt werden kann. Grundsätzlich könnte die Heizanordnung 18 auch in mehrere Bereiche aufgegliedert sein, beispielsweise einen Bereich unmittelbar angrenzend an die Reaktionsmitteleinspritzanordnung 20, ggf. auch in diese integriert, sowie einen weiter stromaufwärts liegenden Bereich.

Über eine Signalleitung S₂ kann ein Ausgangssignal eines Drucksensors zur Ansteuervorrichtung 35 geleitet werden, um somit auch Information über den im Bereich der Heizanordnung 18 bzw. der Reaktionsmittelabgabeanordnung 20 liegenden Reaktionsmitteldruck bereitzustellen. Beruhend auf den über die Signalleitungen S₁ und S₂ gelieferten Informationen kann die Ansteuervorrichtung 35 dann einerseits die Heizanordnung 18 ansteuern, um die gewünschte Überhitzungstemperatur des Reaktionsmittels R bereitzustellen bzw. aufrecht zu erhalten, und kann die Reaktionsmittelförderanordnung 12, im Ausgestaltungsbeispiel der Fig. 3 nur die erste Reaktionsmittelpumpe 26, im Ausgestaltungsbeispiel der Fig. 1 und 2 beide Reaktionsmittelpumpen 22, 26, ansteuern, um einerseits den Basisdruck während der Nicht-Abgabephasen einzustellen bzw. aufrecht zu erhalten, andererseits den Schaltdruck bzw. den über dem Schaltdruck liegenden Druck einzustellen bzw. aufrecht zu erhalten, wenn während der Abgabephasen das Reaktionsmittel R abgegeben werden soll.

Der Ansteuervorrichtung 35 kann ferner beispielsweise Information über den Betriebszustand einer Brennkraftmaschine zugeführt werden, um beruhend darauf die Druckverhältnisse entsprechend einstellen zu können und die gewünschte Menge des Reaktionsmittels angepasst an den Betriebszustand der Brennkraftmaschine abgeben zu können. Die Funktionalität der Ansteuervorrichtung 35 kann beispielsweise auch direkt in ein Motorsteuergerät integriert werden.

Bei einer alternativen Ausgestaltungsform könnte der Drucksensor im stromabwärts der Heizanordnung 18 liegenden Bereich, also beispielsweise zwischen der Heizanordnung 18 und der Reaktionsmittelabgabeanordnung 20 angeordnet sein. Auch eine Integration der Sensoren in die Heizanordnung 18 oder/und die Reaktionsmittelabgabeanordnung 20 ist möglich.

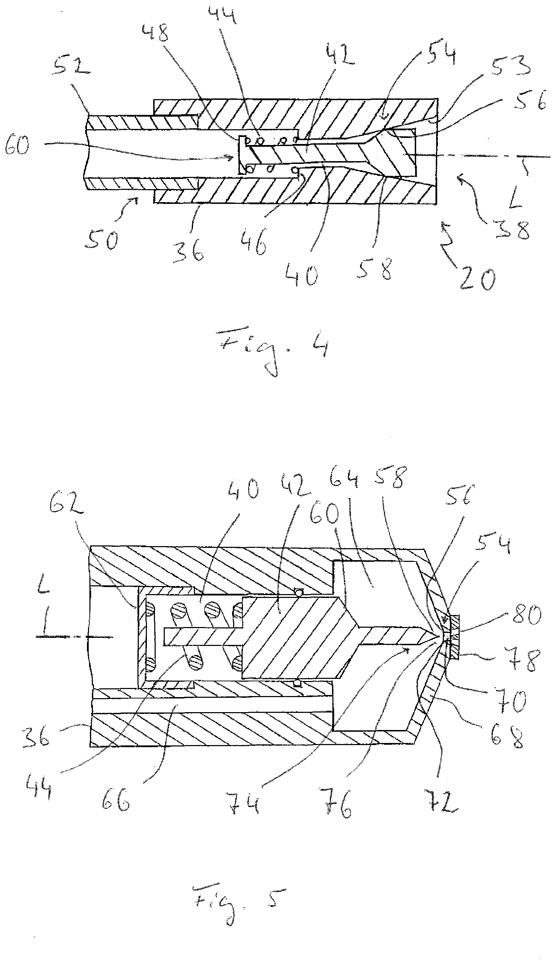

Mit Bezug auf die Fig. 3 und 4 werden nachfolgend verschiedene Ausgestaltungsformen einer passiv wirksamen, also druckabhängig schaltenden Reaktionsmitteleinspritzanordnung 20 beschrieben. Die in den Fig. 4 und 5 dargestellten Reaktionsmitteleinspritzanordnungen 20 können auf einen an einer Abgasanlage einer Brennkraftmaschine vorgesehenen Injektorstutzen montiert werden, um somit das daraus abgegebene Reaktionsmittel in den in der Abgasanlage geführten Abgasstrom abzugeben. Sofern erforderlich, kann in der Abgasanlage stromabwärts dieses Einspritzbereichs ein Element zur Sekundärdispergierung, allgemein auch als Mischelement bezeichnet, vorgesehen sein. Dieses kann Prallflächen aufweisen, auf welchen die darauf auftretenden Reaktionsmitteltröpfchen zerplatzen bzw. dessen Oberflächen durch den Abgasstrom erwärmt sind, um somit die Reaktionsmittelverdampfung weiter zu unterstützen.

Die in Fig. 4 dargestellte Reaktionsmitteleinspritzanordnung 20 umfasst ein Gehäuse 36 mit einem dem Abgasstrom zugewandt zu positionierenden Abgabeöffnungsbereich 38. In einer in dem Gehäuse 36 beispielsweise zentral ausgebildeten und dieses durchsetzenden Öffnung 40 ist ein Sperrelement 42 in Richtung einer Gehäuselängsachse L bewegbar aufgenommen. Das Sperrelement 42 ist in Richtung zu einer dem Sperrzustand der Reaktionsmitteleinspritzanordnung 20 entsprechenden Sperrstellung desselben vorgespannt. Dazu stützt sich eine beispielsweise als Schraubendruckfeder ausgebildete Vorspannfeder 44 an einer stufenartigen Erweiterung 46 der zentralen Öffnung 40 einerseits und an einem Abstützbereich 48 des Sperrelements 42 andererseits ab, so dass das Sperrelement 42 in der Darstellung der Fig. 4 nach links und somit in Richtung in das Gehäuse 36 hinein vorgespannt ist. An einem vom Abgabeöffnungsbereich 38 abgewandt liegenden Anschlussbereich 50 des Gehäuses 36 kann eine beispielsweise von der Heizanordnung 18 herführende Reaktionsmittelleitung 52 angeschlossen sein.

In einem sich beispielsweise konisch erweiternden Bereich 53 der zentralen Öffnung 40 ist ein um die Gehäuselängsachse L ringartig umlaufender Sperrorgansitz 54 mit einem entsprechend ringartig umlaufenden Sperrorgansitz-Verschlussbereich 56 bereitgestellt. Am Sperrorgan 42 selbst ist in Zuordnung zu dem Sperrorgansitz-Verschlussbereich ein entsprechender Sperrorgan-Verschlussbereich 58 ausgebildet, beispielsweise in Form eines ringartig umlaufenden Kantenbereichs. Bei in der Sperrstellung positioniertem Sperrorgan 42 liegt der Sperrorgan-Verschlussbereich 58 auf dem Sperrorgansitz-Verschlussbereich 56 des Sperrorgansitzes 54 auf, so dass durch den in Umfangsrichtung um die Gehäuselängsachse L unterbrechungsfrei durchgehenden Anlagekontakts zwischen dem Sperrorgan 42 und dem Gehäuse 36 das Austreten von Reaktionsmittel R aus der Reaktionsmitteleinspritzanordnung 20 unterbunden ist.

Das Sperrorgan 42 ist in der Öffnung 40 dem Druck des im Gehäuse 36 grundsätzlich auch vorhandenen Reaktionsmittels R ausgesetzt. Dieser Druck wirkt auf alle in axialer Ansicht zum Inneren des Gehäuses 36 hin frei liegenden Oberflächenbereiche des Sperrorgans 42, welche in ihrer Gesamtheit eine Druckbeaufschlagungsfläche 60 bereitstellen. Übersteigt der Reaktionsmitteldruck im Inneren des Gehäuses 36, selbstverständlich unter Berücksichtigung des von der anderen Seite her auf das Sperrelement 42 einwirkenden Drucks, die Vorspannkraft der Vorspannfeder 44, liegt also zumindest der Schaltdruck an, so kann das Vorspannelement 42 entgegen der Vorspannwirkung der Vorspannfeder 44 in der Fig. 4 nach rechts bewegt werden, um somit in eine dem Offenzustand der Reaktionsmitteleinspritzanordnung 20 entsprechende Offenstellung zu gelangen. Das Ausmaß der Verschiebung hängt von der Höhe des Reaktionsmitteldrucks ab. Je höher der Reaktionsmitteldruck, desto stärker ist die auf das Sperrelement 42 einwirkende und dieses entgegen der Vorspannwirkung der Vorspannfeder 44 verschiebende Kraft. Bei derartiger Verschiebung des Sperrelements 42 hebt der Sperrorgan-Verschlussbereich 58 vom Sperrorgansitz-Verschlussbereich 56 ab, so dass zwischen diesen ein ringartiger Durchströmbereich gebildet wird. Die Strömungsquerschnittsfläche des Durchströmbereichs hängt vom Ausmaß der Verschiebung des Sperrorgans 42 und somit auch vom Reaktionsmitteldruck ab. Man erkennt in Fig. 4, dass in Strömungsrichtung auf diesen zwischen dem Sperrorgansitz-Verschlussbereich 56 und den Sperrorgan-Verschlussbereich 58 gebildeten Durchströmbereich der dann sich ausbildende Strömungsquerschnitt zunimmt, so dass der Bereich größten Strömungswiderstands in diesem Durchströmbereich gebildet ist. Die vorangehend angesprochene spontane Verdampfung bzw. Erzeugung sehr kleiner Tröpfchen des Reaktionsmittels tritt also sehr nahe an diesem Durchströmbereich bzw. in Strömungsrichtung unmittelbar folgend auf diesen Durchströmbereich auf. Da keine weiteren Drosselstellen folgen, kann das gesamte so abgegebene Reaktionsmittel in den Abgasstrom gelangen. Es ist also kein Restvolumen vorhanden, in welchem eine Ablagerung des Reaktionsmittels aufgrund einer Harnstoffzersetzung auftreten kann.

Bei der in Fig. 5 dargestellten Ausgestaltungsform der Reaktionsmitteleinspritzanordnung 20 ist das in der zentralen Öffnung 40 des Gehäuses 36 in Richtung der Gehäuselängsachse L verschiebbar aufgenommene Sperrorgan 42 in entgegengesetzter Richtung vorgespannt. Das Sperrorgan 42 steht auch hier unter Vorspannung der Vorspannfeder 44, die sich am Sperrorgan 42 einerseits und einem in die zentrale Öffnung 40 fest eingesetzten Abstützelement 62 andererseits abstützt.

In einem axialen Endbereich des Gehäuses 36 ist eine Abgabekammer 64 für das abzugebende Reaktionsmittel R gebildet, in welche ein das Reaktionsmittel R beispielsweise von der Heizanordnung 18 heranführender Kanal 66 einmündet. In einem kuppelartigen Bereich 68 des Gehäuses 36 ist eine Öffnung 70 gebildet, über welche die Abgabekammer 64 grundsätzlich nach außen offen ist. Ein die Öffnung 70 umgebender Randbereich 72 bildet bei dieser Ausgestaltungsform den Sperrorgansitz-Verschlussbereich 56 des allgemein mit 54 bezeichneten Sperrorgansitzes. An einem in der Sperrstellung des Sperrorgans 42 am Randbereich 72 sich abstützenden Spitzenbereich 74 des Sperrorgans 42 ist der Sperrorgan-Verschlussbereich 58 gebildet, welcher in der Sperrstellung auf dem Sperrorgansitz-Verschlussbereich 54 aufliegt und somit die Abgabekammer 64 gegen die Abgabe von Reaktionsmittel R absperrt.

In der in Fig. 5 dargestellten Offenstellung, in welcher das Sperrelement 42 durch das auf die Druckbeaufschlagungsfläche 60 desselben einwirkende Reaktionsmittel in das Innere des Gehäuses 36 zurückverschoben ist, ist zwischen dem Sperrorgansitz-Verschlussbereich 56 und dem Sperrorgan-Verschlussbereich 58 der vorangehend bereits mit Bezug auf die Fig. 4 erläuterte Durchströmbereich 76 gebildet, welcher sich auch hier als im Wesentlichen ringartiger Querschnittsflächenbereich darstellt, und durch welchen hindurch das abgegebene Reaktionsmittel R in den Bereich der Öffnung 70 gelangt.

An der Außenseite des Gehäuses 36 ist, die Öffnung 70 überdeckend, eine allgemein auch als Spritzlochplatte bezeichnete Reaktionsmittelabgabedüsenanordnung 78 vorgesehen. Diese umfasst eine Mehrzahl von mit der Öffnung 70 in Verbindung stehenden und das Reaktionsmittel nach außen hin abgebenden Düsenöffnungen 80. Um hier eine Düsenwirkung zu erzielen, ist der Strömungswiderstand der Reaktionsmittelabgabedüsenanordnung 78, also der durch alle Düsenöffnungen 80 bereitgestellte Strömungswiderstand, für das Reaktionsmittel R größer, als der im Bereich des Durchtrittsbereichs 76 bei in der Offenstellung positioniertem Sperrorgan 42 bereitgestellte Strömungswiderstand. Dies kann beispielsweise dadurch erreicht werden, dass der gesamte Strömungsquerschnitt aller Düsenöffnungen 80 kleiner ist, als der Strömungsquerschnitt im Durchtrittsbereich 76.

Gelangt bei in der Offenstellung positioniertem Sperrorgan 42 das zunächst noch unter höherem Druck stehende überhitzte Reaktionsmittel R durch den Durchtrittsbereich 76 in den Bereich der Öffnung 70, so kann bereits eine geringfügige Entspannung des Reaktionsmitteldrucks auftreten. Eine vollständige Entspannung tritt jedoch erst dann auf, wenn das durch die Öffnung 70 und die Düsenöffnungen 80 hindurchgetretene Reaktionsmittel R in den Abgasstrom abgegeben wird. Ein substantieller Vorteil dieser Ausgestaltung liegt darin, dass die Ausgestaltung des Sprühnebels im Wesentlichen bestimmt ist durch die Gestaltung der Reaktionsmittelabgabedüsenanordnung 78 und weniger beeinflusst ist durch die Ausgestaltung bzw. Positionierung des Sperrorgans 42. Dies bedeutet, dass für verschiedenste Reaktionsmitteldrücke und damit einhergehend verschiedenste Positionierungen des Sperrorgans 42 in dessen Offenstellung zwar die Menge des abgegebenen Reaktionsmittels variieren kann, die Abgabecharakteristik, also die räumliche Ausgestaltung des Sprühnebels, davon jedoch unbeeinflusst ist.

Obgleich bei dieser Ausgestaltungsform der Reaktionsmitteleinspritzanordnung 20 auf den Durchströmbereich 76 noch ein weiterer Drosselbereich mit größerem Strömungswiderstand folgt, also grundsätzlich ein im Wesentlichen auch durch das Volumen der Öffnung 70 bereitgestelltes Restvolumen besteht, in welchem abgegebenes und teilweise verdampftes Reaktionsmittel sich ansammeln kann, ist die Gefahr der Entstehung von Reaktionsmittelablagerungen vergleichsweise gering, da dieses Restvolumen unmittelbar benachbart ist zu demjenigen Bereich, in welchem das Reaktionsmittel in den Abgasstrom geleitet wird.

## Patentansprüche

1. Vorrichtung zur Abgabe von Reaktionsmittel (R) in den Abgasstrom (A) einer Brennkraftmaschine, umfassend eine Reaktionsmitteleinspritzanordnung (20), eine Reaktionsmittelförderanordnung (12) mit einer ersten Reaktionsmittelpumpe (22) und einer zweiten Reaktionsmittelpumpe (26) zum Fördern von Reaktionsmittel (R) aus einem Reaktionsmittelreservoir (14) zu der Reaktionsmitteleinspritzanordnung (20), wobei die erste Reaktionsmittelpumpe (22) dazu ausgebildet ist, einen über einem Schaltdruck zum Schalten der Reaktionsmitteleinspritzanordnung (20) aus dem Sperrzustand in den Offenzustand liegenden Reaktionsmitteldruck zu erzeugen und die zweite Reaktionsmittelpumpe (26) zum Bereitstellen von Reaktionsmittel (R) mit einem unter dem Schaltdruck und über einem Dampfdruck des Reaktionsmittels (R) im Bereich einer Heizanordnung (18) liegenden Basisdruck vorgesehen ist, wobei die Reaktionsmitteleinspritzanordnung (20) in Abhängigkeit von einem durch die Reaktionsmittelfördereranordnung (12) erzeugten Reaktionsmitteldruck zwischen einem Offenzustand zum Abgeben von Reaktionsmittel (R) und einem Sperrzustand zum Unterbinden der Reaktionsmittelabgabe umschaltbar ist, **gekennzeichnet durch** eine Ansteuervorrichtung (35) zum Ansteuern der Heizanordnung (18) zum Erwärmen von durch die Reaktionsmittelförderanordnung (12) zu der Heizanordnung (18) gefördertem und zu der Reaktionsmitteleinspritzanordnung (20) weiter gefördertem Reaktionsmittel (R), und **dadurch, dass** die erste Reaktionsmittelpumpe (22) und die zweite Reaktionsmittelpumpe (26) zueinander parallel angeordnet sind.

2. Vorrichtung nach Anspruch 1, **dadurch gekennzeichnet, dass** die Reaktionsmitteleinspritzanordnung (20) ein in Abhängigkeit von dem Reaktionsmitteldruck zwischen einer Sperrstellung und einer Offenstellung verstellbares Sperrorgan (42) umfasst,
vorzugsweise wobei:
- das Sperrorgan (42) eine dem Reaktionsmitteldruck ausgesetzte Druckbeaufschlagungsfläche (60) aufweist, oder/und wobei dem Sperrorgan (42) eine Vorspannanordnung, vorzugsweise Vorspannfeder (44), zum Vorspannen des Sperrorgans (42) in seine Sperrstellung entgegen dem auf eine dem Reaktionsmitteldruck ausgesetzte Druckbeaufschlagungsfläche (60) des Sperrorgans (42) einwirkenden Reaktionsmitteldruck zugeordnet ist,
oder/und
- dem Sperrorgan (42) ein Sperrorgansitz (54) mit einem Sperrorgansitz-Verschlussbereich (56) zugeordnet ist, und wobei bei in der Sperrstellung positioniertem Sperrorgan (42) das Sperrorgan (42) mit einem Sperrorgan-Verschlussbereich (58) im Wesentlichen fluiddicht an dem Sperrorgansitz-Verschlussbereich (56) anliegt und bei in der Offenstellung positionierten Sperrorgan (42) ein Durchströmbereich (76) zwischen dem Sperrorgan (42) und dem Sperrorgansitz (54) gebildet ist.

3. Vorrichtung nach Anspruch 2, **dadurch gekennzeichnet, dass** in der Reaktionsmitteleinspritzanordnung (20) bei in der Offenstellung positioniertem Sperrorgan (42) auf den Reaktionsmitteldurchströmbereich (76) kein Bereich mit größerem Strömungswiderstand für das Reaktionsmittel (R) als im Durchströmbereich (76) folgt, oder dass die Reaktionsmitteleinspritzanordnung (20) stromabwärts des Reaktionsmitteldurchströmbereichs (76) eine Reaktionsmittelabgabedüsenanordnung (78) mit größerem Strömungswiderstand für das Reaktionsmittel (R) als im Durchströmbereich (76) aufweist.

4. Vorrichtung nach einem der Ansprüche 1-3, **dadurch gekennzeichnet, dass** die erste Reaktionsmittelpumpe (22) eine Hubkolbenpumpe umfasst, oder/und dass der ersten Reaktionsmittelpumpe (22) ein stromabwärts derselben und stromaufwärts der Heizanordnung (18) angeordnetes Rückschlagventil (34) zugeordnet ist.

5. Vorrichtung nach Anspruch 4, **dadurch gekennzeichnet, dass** die zweite Reaktionsmittelpumpe (26) eine Zahnradpumpe umfasst, oder/und dass der zweiten Reaktionsmittelpumpe (26) ein stromabwärts derselben angeordnetes Überdruckventil (30) zugeordnet ist, wobei das Überdruckventil (30) ein Ansteigen des durch die zweite Reaktionsmittelpumpe (26) erzeugten Reaktionsmitteldrucks über den Basisdruck unterbindet.

6. Vorrichtung nach Anspruch 5, **dadurch gekennzeichnet, dass** die erste Reaktionsmittelpumpe (22) mit dem Rückschlagventil (34) und die zweite Reaktionsmittelpumpe (26) mit dem Überdruckventil (30) zueinander parallel angeordnet sind.

7. Vorrichtung nach Anspruch 5 und Anspruch 6, **dadurch gekennzeichnet, dass** das Überdruckventil (30) zwischen der zweiten Reaktionsmittelpumpe (26) und der ersten Reaktionsmittelpumpe (22) angeordnet ist.

8. Vorrichtung nach einem der Ansprüche 1-7, **dadurch gekennzeichnet, dass** die Ansteuervorrichtung (35) zum Ansteuern der Heizanordnung (18) auf Grundlage einer Reaktionsmitteltemperatur im Bereich der Heizanordnung (18) oder/und der Reaktionsmittelabgabeanordnung (20) oder/und auf Grundlage einer Soll-Reaktionsmitteltemperatur vorgesehen ist, oder/und zum Ansteuern der Reaktionsmittelförderanordnung (12), vorzugsweise auf Grundlage eines Reaktionsmitteldrucks im Bereich der Heizanordnung (18) oder/und der Reaktionsmitteleinspritzanordnung (20) oder/und auf Grundlage eines Soll-Reaktionsmitteldrucks vorgesehen ist.

9. Verfahren zum Abgeben von Reaktionsmittel (R) in den Abgasstrom (A) einer Brennkraftmaschine vermittels einer Vorrichtung (10) nach einem der vorangehenden Ansprüche, umfassend die Maßnahmen:
a) Betreiben der Heizeinrichtung (18) zum Erwärmen von durch die Reaktionsmittelförderanordnung (12) gefördertem Reaktionsmittel (R) auf eine Überhitzungstemperatur,
b) Betreiben der Reaktionsmittelförderanordnung (12) in einer Nicht-Abgabephase derart, dass der Reaktionsmitteldruck wenigstens im Bereich der Heizanordnung (18) bei einem Basisdruck über einem Dampfdruck des Reaktionsmittels (R) im Bereich der Heizanordnung (18) und unter einem Schaltdruck der Reaktionsmitteleinspritzanordnung (20) zum Schalten der Reaktionsmitteleinspritzanordnung (20) von dem Sperrzustand zu dem Offenzustand liegt,
c) Betreiben der Reaktionsmittelförderanordnung (12) in einer Abgabephase derart, dass der Reaktionsmitteldruck über dem Schaltdruck liegt.

10. Verfahren nach Anspruch 9, **dadurch gekennzeichnet, dass** bei der Maßnahme a) die Heizanordnung (18) derart betrieben wird, dass die Temperatur des Reaktionsmittels (R) zwischen von 100 °C bis 370 °C liegt, vorzugsweise im Bereich von 120 °C bis 300 °C, weiter bevorzugt im Bereich von 130 °C bis 250 °C, am meisten bevorzugt im Bereich von 150 °C bis 200 °C, oder/und dass das Reaktionsmittel (R) eine Harnstoff/Wasser-Lösung umfasst, oder/und dass bei der Maßnahme b) die Reaktionsmittelförderanordnung (12) derart betrieben wird, dass der Reaktionsmitteldruck im Bereich des 1,1-1,2-Fachen des Dampfdrucks des Reaktionsmittels (R) im Bereich der Heizanordnung (18) liegt oder/und dass der Schaltdruck im Bereich des 1,1-1,5-Fachen, vorzugsweise 1,2-1,4-Fachen des Basisdrucks liegt, oder/und dass bei der Maßnahme c) die Reaktionsmittelförderanordnung (12) derart betrieben wird, dass der Reaktionsmitteldruck um 0,2-2 bar über den Schaltdruck liegt.

11. Verfahren nach Anspruch 9 oder 10, sofern auf Anspruch 5 rückbezogen, **dadurch gekennzeichnet, dass** bei der Maßnahme b) nur die zweite Reaktionsmittelpumpe (26) zum Bereitstellen des Reaktionsmitteldrucks betrieben wird und bei der Maßnahme c) wenigstens die erste Reaktionsmittelpumpe (22) zum Bereitstellen des Reaktionsmitteldrucks betrieben wird.

12. Verfahren nach Anspruch 9 oder 10, sofern auf Anspruch 4 rückbezogen, **dadurch gekennzeichnet, dass** bei der Maßnahme b) und bei der Maßnahme c) der Reaktionsmitteldruck durch die erste Reaktionsmittelpumpe (12) bereitgestellt wird.

13. Verfahren nach Anspruch 11 oder 12, sofern auf Anspruch 4 rückbezogen, **dadurch gekennzeichnet, dass** bei der Maßnahme c) die erste Reaktionsmittelpumpe (22) einen einzigen Kolbenhub während einer Abgabephase durchführt.

14. Verfahren nach einem der Ansprüche 9-13, **dadurch gekennzeichnet, dass** während Durchführung der Maßnahme a) die Reaktionsmittelförderanordnung (12) alternierend gemäß Maßnahme b) in einer Nicht-Abgabephase und gemäß Maßnahme c) in einer Abgabephase betrieben wird.

15. Verfahren nach Anspruch 14, **dadurch gekennzeichnet, dass** eine Dauer der Nicht-Abgabephasen oder/und eine Dauer der Abgabephasen oder/und der Reaktionsmitteldruck bei der Maßnahme c) in Abhängigkeit von einem Betriebszustand einer Brennkraftmaschine eingestellt wird.

## Claims

1. Device for releasing reactant (R) into the exhaust gas stream (A) of an internal combustion engine, comprising a reactant injection arrangement (20), a reactant delivery arrangement (12) with a first reactant pump (22) and a second reactant pump (26) for delivering reactant (R) from a reactant reservoir (14) to the reactant injection arrangement (20), wherein the first reactant pump (22) is configured to generate a reactant pressure lying above a switching pressure for switching the reactant injection arrangement (20) from the locked state into the open state, and wherein the second reactant pump (26) is provided for providing reactant (R) with a base pressure lying below the switching pressure and above a vapor pressure of the reactant (R) in the area of a heating arrangement (18), wherein the reactant injection arrangement (20) is switchable as a function of a reactant pressure generated by the reactant delivery arrangement (12) between an open state for releasing reactant (R) and a locked state for preventing the release of reactant, **characterized by** an actuating device (35) for actuating the heating arrangement (18) for heating reactant (R) delivered by the reactant delivery arrangement (12) to the heating arrangement (18) and further to the reactant injection arrangement (20) and in that the first reactant pump (22) and the second reactant pump (26) are arranged parallel.

2. Device in accordance with claim 1, **characterized in that** the reactant injection arrangement (20) comprises a locking element (42) which can be adjusted as a function of the reactant pressure between a locked position and an open position,
wherein preferably:
- the locking element (42) has a pressurization area (60) exposed to the reactant pressure, or/and wherein a pre-stressing arrangement, preferably a pre-stressing spring (44), for pre-stressing the locking element (42) in its locked position against the reactant pressure acting on a pressurization area (60) of the locking element (42), which pressurization area is exposed to the reactant pressure, is associated with the locking element (42),
or/and
- a locking element seat (54) with a locking element seat closing area (56) is associated with the locking element (42), and wherein when the locking element (42) is positioned in the locked position, the locking element (42) with a locking element closing area (58) is in contact with the locking element seat closing area (56) in an essentially fluid-tight manner, and when the locking element (42) is positioned in the open position, a flow-through area (76) is formed between the locking element (42) and the locking element seat (54).

3. Device in accordance with claim 2, **characterized in that** in the reactant injection arrangement (20), when the locking element (42) is positioned in the open position, no area with greater flow resistance for the reactant (R) than in the flow-through area (76) follows the reactant flow-through area (76) or **in that** the reactant injection arrangement (20) has, downstream of the reactant flow-through area (76), a reactant release nozzle arrangement (78) with greater flow resistance for the reactant (R) than in the flow-through area (76).

4. Device in accordance with one of the claims 1-3, **characterized in that** the first reactant pump (22) comprises a reciprocating piston pump, or/and that a non-return valve (34), which is arranged downstream of the reactant pump (22) and upstream of the heating arrangement (18), is associated with the first reactant pump (22).

5. Device in accordance with claim 4, **characterized in that** the second reactant pump (26) comprises a gear pump, or/and that an overpressure valve (30), which is arranged downstream of the second reactant pump (26), is associated with the second reactant pump (26), wherein the overpressure valve (30) prevents an increase in the reactant pressure generated by the second reactant pump (26) above the base pressure.

6. Device in accordance with claim 5, **characterized in that** the first reactant pump (22) with the non-return valve (34), and the second reactant pump (26) with the overpressure valve (30) are arranged parallel to one another.

7. Device in accordance with claim 5 and claim 6, **characterized in that** the overpressure valve (30) is arranged between the second reactant pump (26) and the first reactant pump (22).

8. Device in accordance with one of the claims 1-7, **characterized in that** the actuating device (35) is provided for actuating the heating arrangement (18), preferably on the basis of a reactant temperature in the area of the heating arrangement (18) or/and of the reactant release arrangement (20) or/and on the basis of a desired reactant temperature, or/and for actuating the reactant delivery arrangement (12), preferably on the basis of a reactant pressure in the area of the heating arrangement (18) or/and of the reactant injection arrangement (20) or/and on the basis of a desired reactant pressure.

9. Method for releasing reactant (R) into the exhaust gas stream (A) of an internal combustion engine by means of a device (10) in accordance with one of the preceding claims, comprising the following steps:
a) operating the heating arrangement (18) for heating reactant (R) delivered by the reactant delivery arrangement (12) to an overheating temperature,
b) operating the reactant delivery arrangement (12) in a non-release phase such that the reactant pressure at least in the area of the heating arrangement (18) is at a base pressure above a vapor pressure of the reactant (R) in the area of the heating arrangement (18) and below the switching pressure of the reactant injection arrangement (20) for switching the reactant injection arrangement (20) from the locked state to the open state,
c) operating the reactant delivery arrangement (12) in a release phase such that the reactant pressure is above the switching pressure.

10. Method in accordance with claim 9, **characterized in that** in step a) the heating arrangement (18) is operated such that the temperature of the reactant (R) is in the range of 100°C to 370°C, preferably in the range of 120°C to 300°C, more preferably in the range of 130°C to 250°C, and most preferably in the range of 150°C to 200°C or/and **in that** the reactant (R) comprises a urea/water solution, or/and **in that** in step b) the reactant delivery arrangement (12) is operated such that the reactant pressure is in the range of 1.1-1.2 times the vapor pressure of the reactant (R) in the area of the heating arrangement (18) or/and that the switching pressure is in the range of 1.1-1.5 times, and preferably 1.2-1.4 times the base pressure, or/and **in that** in step c) the reactant delivery arrangement (12) is operated such that the reactant pressure is above the switching pressure by 0.2-2 bar.

11. Method in accordance with claim 9 or 10, provided that reference is made back to claim 5, **characterized in that** in step b) only the second reactant pump (26) is operated for providing the reactant pressure and that in step c) at least the first reactant pump (22) is operated for providing the reactant pressure.

12. Method in accordance with claim 9 or 10, provided that reference is made back to claim 4, **characterized in that** in step b) and in step c) the reactant pressure is provided by the first reactant pump (12).

13. Method in accordance with claim 11 or 12, provided that reference is made back to claim 4, **characterized in that** in step c) the first reactant pump (22) carries out a single piston stroke during a release phase.

14. Method in accordance with one of the claims 9-13, **characterized in that** while carrying out step a), the reactant delivery arrangement (12) is alternately operated according to step b) in a non-release phase and according to step c) in a release phase.

15. Method in accordance with claim 14, **characterized in that** a duration of the non-release phases or/and a duration of the release phases or/and the reactant pressure in step c) is set as a function of an operating state of an internal combustion engine.

## Revendications

1. Dispositif pour libérer du réactif (R) dans le courant de gaz d'échappement (A) d'un moteur à combustion interne, comprenant un arrangement d'injection de réactif (20), un arrangement d'alimentation en réactif (12) avec une première pompe de réactif (22) et une deuxième pompe de réactif (26) pour transporter du réactif (R) d'un réservoir de réactif (14) à l'arrangement d'injection de réactif (20), où la première pompe de réactif (22) est configurée pour générer une pression de réactif au-dessus d'une pression de commutation pour commuter l'arrangement d'injection de réactif (20) de l'état bloqué dans l'état ouvert, et où la deuxième pompe de réactif (26) est prévue pour prévoir du réactif (R) avec une pression de base en dessous de la pression de commutation et au-dessus de la pression de vapeur du réactif (R) dans la région d'un arrangement de chauffage (18), où l'arrangement d'injection de réactif (20) est en fonction d'une pression de réactif générée par l'arrangement d'alimentation en réactif (12) commutable entre un état ouvert pour libérer du réactif (R) et un état fermé pour prévenir la libération de réactif, **caractérisé par** un dispositif d'actionnement (35) pour actionner l'arrangement de chauffage (18) pour chauffer du réactif (R) transporté par l'arrangement d'alimentation en réactif (12) à l'arrangement de chauffage (18) et puis à l'arrangement d'injection de réactif (20) et en ce que la première pompe de réactif (22) et la deuxième pompe de réactif (26) sont arrangées en parallèle.

2. Dispositif selon la revendication 1, **caractérisé en ce que** l'arrangement d'injection de réactif (20) comprend un membre de verrouillage (42) réglable en fonction de la pression du réactif entre une position de verrouillage et une position ouverte,
où de préférence :
- le membre de verrouillage (42) comprend une surface de pressurisation (60) exposée à la pression de réactif, ou/et où un arrangement de pré-tension, de préférence un ressort de pré-tension (44) pour pousser le membre de verrouillage (42) dans la position de verrouillage contre la pression de réactif agissant sur une surface de pressurisation (60) du membre de blocage (42) exposée à la pression de réactif, est associée au membre de verrouillage (42),
ou/et
- un logement de membre de verrouillage (54) avec une région de fermeture de logement de membre de verrouillage (56) est associé au membre de verrouillage (42), et quand le membre de verrouillage (42) est positionné dans la position de verrouillage, le membre de verrouillage (42) avec une région de fermeture de membre de verrouillage (58) est en contact avec la région de fermeture de logement de membre de verrouillage (56) de manière essentiellement étanche au fluide, et quand le membre de verrouillage (42) est positionné dans la position ouverte, une région de passage (76) est formée entre le membre de verrouillage (42) et le logement de membre de verrouillage (54).

3. Dispositif selon la revendication 2, **caractérisé en ce que** dans l'arrangement d'injection de réactif (20), quand le membre de verrouillage (42) est positionné dans la position ouverte, aucune région avec une plus grande résistance au flux pour le réactif (R) que dans la région de passage (76) suit à la région de passage (76) du réactif, ou **en ce que** l'arrangement d'injection de réactif (20) a, en aval de la région de passage (76) du réactif un arrangement de buse de libération de réactif (78) avec une plus grande résistance pour le réactif (R) que dans la région de passage (76).

4. Dispositif selon une des revendications 1-3, **caractérisé en ce que** la première pompe de réactif (22) comprend une pompe de piston à mouvement alternatif ou/et **en ce qu'**une soupape anti-retour (34) qui est arrangée en aval de la pompe de réactif (22) et en amont de l'arrangement de chauffage (18) est associée à la première pompe de réactif (22).

5. Dispositif selon la revendication 4, **caractérisé en ce que** la deuxième pompe de réactif (26) comprend une pompe à engrenage ou/et **en ce qu'**une soupape de surpression (30) qui est arrangée en aval de la deuxième pompe de réactif (26) est associée à cette dernière, où la soupape de surpression (30) évite une augmentation de la pression de réactif générée par la deuxième pompe de réactif (26) au-dessus de la pression de base.

6. Dispositif selon la revendication 5, **caractérisé en ce que** la première pompe de réactif (22) avec la soupape anti-retour (34) et la deuxième pompe de réactif (26) avec la soupape de surpression (30) sont arrangées de façon parallèle.

7. Dispositif selon la revendication 5 et la revendication 6, **caractérisé en ce que** la soupape anti-retour (34) est arrangée entre la deuxième pompe de réactif (26) et la première pompe de réactif (22).

8. Dispositif selon une des revendications 1-7, **caractérisé en ce que** le dispositif d'actionnement (35) est prévu pour actionner l'arrangement de chauffage (18), sur la base d'une température de réactif dans la région de l'arrangement de chauffage (18) ou/et de l'arrangement de libération de réactif (20) ou/et sur la base d'une température de réactif désirée, ou/et pour actionner l'arrangement d'alimentation en réactif (12), de préférence sur la base d'une pression de réactif dans la région de l'arrangement de chauffage (18) ou/et de l'arrangement d'injection de réactif (20) ou/et sur la base d'une pression désirée du réactif.

9. Procédé pour libérer du réactif (R) dans le courant de gaz d'échappement (A) d'un moteur à combustion interne au moyen d'un dispositif (10) selon une des revendications précédentes, comprenant les étapes suivantes :
a) opérer l'arrangement de chauffage (18) pour chauffer du réactif (R) délivre par l'arrangement d'alimentation en réactif (12) à une température de surchauffe,
b) opérer l'arrangement d'alimentation en réactif (12) dans une phase de non-libération de sorte que la pression du réactif, au moins dans la région de l'arrangement de chauffage (18), est à une pression de base au-dessus d'une pression de vapeur du réactif (R) dans la région de l'arrangement de chauffage (18) et en-dessous de la pression de commutation de l'arrangement d'injection de réactif (20) pour commuter l'arrangement d'injection de réactif (20) de l'état fermé à l'état ouvert,
c) opérer l'arrangement d'alimentation en réactif (12) dans une phase de libération de sorte que la pression du réactif est au-dessus de la pression de commutation.

10. Procédé selon la revendication 9, **caractérisé en ce que** pendant l'étape a) l'arrangement de chauffage (18) est opéré de sorte que la température du réactif (R) est de l'ordre de 100°C à 370°C, de préférence de l'ordre de 120°C à 300°C, de manière encore plus préférée de l'ordre de 130°C à 250 °C, et de manière la plus préférée de l'ordre de 150°C á 200 °C ou/et que le réactif (R) comprend une solution urée/eau ou/et que pendant l'étape b) l'arrangement d'alimentation en réactif (12) est opérée de sorte que la pression du réactif est de l'ordre de 1,1-1,2-fois la pression de vapeur du réactif (R) dans la région de l'arrangement de chauffage (18) ou/et **en ce que** la pression de commutation est de l'ordre de 1,1-1,5-fois, et de préférence de l'ordre de 1,2-1,4-fois la pression de base, ou/et **en ce que** pendant l'étape c) l'arrangement d'alimentation en réactif (12) est opérée de sorte que la pression du réactif est de 0,2-2 bar plus grande que la pression de commutation.

11. Procédé selon les revendications 9 ou 10, à condition d'une référence à la revendication 5, **caractérisé en ce que** pendant l'étape b) seulement la deuxième pompe de réactif (26) est opérée pour prévoir la pression du réactif et pendant l'étape c) au moins la première pompe de réactif (22) est opérée pour prévoir la pression du réactif.

12. Procédé selon les revendications 9 ou 10, à condition d'une référence à la revendication 4, **caractérisé en ce que** pendant l'étape b) et pendant l'étape c) la pression du réactif est prévue par la première pompe de réactif (12).

13. Procédé selon les revendications 11 ou 12, à condition d'une référence à la revendication 4, **caractérisé en ce que** pendant l'étape c) la première pompe de réactif (22) réalise une seule course du piston pendant une phase de libération.

14. Procédé selon une des revendications 9-13, **caractérisé en ce que** durant la réalisation de l'étape a) l'arrangement d'alimentation en réactif (12) est opérée de manière alternante selon l'étape b) pendant une phase de non-libération et selon L'étape c) pendant une phase de libération.

15. Procédé selon la revendication 14, **caractérisé en ce qu'**une durée des phases de non-libération ou/et une durée des phases de libération ou/et la pression du réactif pendant l'étape c) est réglée en fonction d'un état opératoire d'un moteur à combustion interne.
